# EUROPÄISCHE PATENTSCHRIFT

(11) **EP 2 407 328 B1**
(45) Veröffentlichungstag und Bekanntmachung des Hinweises auf die Patenterteilung: **17.10.2012**
(21) Anmeldenummer: 10007395.6
(22) Anmeldetag: 16.07.2010
(51) Int. Cl.: B60H 1/22, B60H 1/00, B60H 1/14

(54) **Elektrische Heizvorrichtung**
Electric heating device
Dispositif de chauffage électrique

(43) Veröffentlichungstag der Anmeldung: 18.01.2012
(73) Patentinhaber: Eberspächer catem GmbH & Co. KG, 76863 Herxheim (DE)
(72) Erfinder: Dieter, Emanuel, 76855 Annweiler (DE); Reiss, Holger, 76764 Rheinzabern (DE)
(74) Vertreter: Grünecker, Kinkeldey, Stockmair & Schwanhäusser

(56) Entgegenhaltungen:
- EP-A1- 0 949 095
- DE-A1- 19 542 125
- DE-A1- 19 730 678
- DE-A1-102009 020 468
- US-A1- 2002 167 227

## Beschreibung

Die vorliegende Erfindung betrifft eine elektrische Heizvorrichtung für ein Kraftfahrzeug. Insbesondere betrifft die vorliegende Erfindung eine elektrische Heizvorrichtung mit einem flüssigen Medium als Wärmeträger, die für Elektro- und Hybridfahrzeuge geeignet ist.

Hinsichtlich der Heizung ergibt sich bei Fahrzeugen mit Elektro- oder Hybridantrieb daraus ein Problem, dass die Antriebseinheit des Kraftfahrzeuges keine ausreichende Abwärme zur Erwärmung oder Klimatisierung des Fahrzeugs abgibt. Eine entsprechende Kraftfahrzeugheizung muss sich deshalb dazu eignen, sowohl den Innenraum des Kraftfahrzeugs mit der erforderlichen Heizwärme zu versorgen, als auch die für die ablaufenden Prozesse in einzelnen Anlagenteilen des Kraftfahrzeugs erforderliche oder zumindest diese fördernde Wärme bereitzustellen, wie z.B. zur Vorwärmung des Fahrzeugakkumulators. Es bietet sich an, die erforderliche Wärme auf elektrischem Wege bereitzustellen. Im Stand der Technik ist bekannt, für diese Zwecke sogenannte Widerstandsheizelemente oder PTC (Positive Temperature Coefficient)-Heizelemente einzusetzen. Diese sind selbstregelnd, da sie mit zunehmender Erwärmung einen höheren Widerstand zeigen, und somit eine geringere Menge an Strom durchlassen. Die selbstregelnden Eigenschaften der PTC-Heizelemente verhindern somit eine Überhitzung.

Dementsprechend werden PTC-Heizelemente regelmäßig in Heizvorrichtungen eingesetzt, die insbesondere der Erwärmung des Fahrgastinnenraums bei solchen Fahrzeugen dienen, deren Antrieb keine ausreichende Prozesswärme zur Klimatisierung oder Heizung des Fahrzeuginnenraums abgibt. Bei Hybridfahrzeugen kann eine PTC-Heizvorrichtung auch als Zuheizer in den Phasen, in denen der Verbrennungsmotor nicht läuft (z.B. an der Ampel oder im Stau) eingesetzt werden.

Beim Einsatz elektrischer Heizelemente im Fahrzeug mit Elektroantrieb ergibt sich ein weiteres Problem daraus, dass die Fahrzeugbatterie (Akkumulator) als Energiequelle sowohl für den Fahrzeugantrieb zur Fortbewegung als auch für die Heizung dient. Somit konkurrieren Fahrzeugantrieb und Heizung um die begrenzte Energiemenge, die zwischen zwei Batterieladevorgängen zur Verfügung steht. Anders ausgedrückt, verringert sich der Aktionsradius des Fahrzeugs zwischen zwei Batterieladungen mit der für das elektrische Heizen verbrauchten Elektroenergie.

Im Elektro- oder Hybridfahrzeug spielt daher ein gut durchdachtes Konzept des Energiemanagements eine zentrale Rolle, in welches der Antrieb, die Heizung sowie weitere stromverbrauchende Komponenten, wie etwa die Beleuchtung, einbezogen werden. Eine wichtige Rolle für das Energiemanagement spielt die Nutzung zusätzlicher, nicht auf der Elektroenergie der Batterie beruhender Energieressourcen im Fahrzeug. Solche stehen im Fahrzeug insbesondere in Form von Abwärme bestimmter Fahrzeugkomponenten zur Verfügung. Komponenten, die zusätzliche Energie in Form von Abwärme zur Verfügung stellen sind u.a. ein zusätzlicher Verbrennungsmotor beim Hybridfahrzeug ("Range Extender"), Bremsen und die Fahrzeugbatterie selbst, oder ein eingebautes Batterieladegerät (On-Board-Ladegerät). Es ist deshalb wünschenswert, im Fahrzeug entstehende Abwärme im Rahmen des Energiemanagements so weit als möglich für die Heizung mitzunutzen, um den Aktionsradius zu erweitern. Bei der PTC-Heizung wird die Luft im Fahrgastinnenraum mit Hilfe der PTC-Widerstandsheizelemente entweder direkt (Luftheizung) oder indirekt über einem Kreislauf, in dem eine warme Flüssigkeit durch Radiatoren strömt, erwärmt. Vorzugsweise wird als Flüssigkeit Wasser verwendet (Warmwasserheizung). Für das Energiemanagement hat die Warmwasserheizung den Vorteil, dass die in einem Bereich des Fahrzeugs (Kühlkreislauf) vom Wasser aufgenommene Abwärme von Kühl- und Heizkreislauf an anderer Stelle zur Erwärmung eingesetzt werden kann.

Es ist aber zu beachten, dass die Abwärme von Fahrzeugkomponenten in der Regel nur temporär zur Verfügung steht. So liefert ein zusätzlicher Verbrennungsmotor beim Hybridfahrzeug nur dann Abwärme, wenn er läuft. Bremsen liefern eine nennenswerte Abwärme insbesondere bei längeren Gefällestrecken. Bezüglich der Fahrzeugbatterie ist es sogar so, dass diese zunächst durch Vorheizen auf eine erforderliche Betriebstemperatur gebracht werden muss, und anschließend bei laufendem Betrieb zu kühlen ist. Die Verbindung von Heiz- und Kühlkreisläufen ist somit insbesondere dann von Nachteil, wenn bei fehlender Abwärme das Vorhandensein einer großen Menge kalter Kühlflüssigkeit im Umlauf effizientes Heizen verhindert, und somit den Elektroenergieverbrauch und den Aktionsradius negativ beeinflusst.

Die US-Patentanmeldung 2002/0167227 A1 beschreibt eine elektrische Laststeuerung mit einer thermischen Sicherung für eine Fahrzeugheizung in einer Klimaanlage. In dem Heizkreislauf sind elektrische Heizeinrichtungen vorgesehen. Der Heizkreislauf kann wahlweise erweitert werden durch Zuschalten eines Zusatzkreislaufs, in dem Abwärme einer Brennstoffzelle und/oder eines Kühlers aufgenommen werden kann. Insbesondere wird der Zusatzkreislauf zugeschaltet, wenn die Kühlwassertemperatur nach dem Durchfluss der Brennstoffzelle im Zusatzkreislauf einen bestimmten Wert überschreitet. In diesem Falle werden die elektrischen Heizelemente abgeschaltet. Wenn die Kühlwassertemperatur im Zusatzkreislauf unter dem vorgegebenen Wert liegt, wird der Zusatzkreislauf abgeschaltet, und die Heizung des Wassers erfolgt mit den elektrischen Heizelementen. Diese sind vorzugsweise PTC-Heizelemente. Ihre Leistung wird vorzugsweise nach Art einer PWM angesteuert.

Die deutsche Offenlegungsschrift DE 197 30 678 A1 beschreibt eine kombinierte Heiz-/Kühlvorrichtung für ein Hybridfahrzeug. In einem Heizkreislauf sind neben PTC-Heizelementen verschiedene Wärmetauscher, insbesondere zur Wärmeaufnahme von einer Hochtemperaturbatterie und einer Brennkraftmaschine vorgesehen. Durch entsprechende Ansteuerung einer Mehrzahl von Ventilen können verschiedene Teilkreisläufe wahlweise zu- oder abgeschaltet werden. Insbesondere kann ein Wärmetauscher der Brennkraftmaschine (BKM) wahlweise aus dem Kreislauf herausgenommen oder in diesen aufgenommen werden, bzw. es kann eine Innenraumheizung nur mit Hilfe der Abwärme von der BKM erfolgen.

Druckschrift DE 195 42 125 A1 beschreibt einen Heiz- und Kühlmittelkreislauf für ein Elektrofahrzeug mit einem elektrischen Heizelement, bei dem ein Kühler und andere Wärmetauscher für Abwärme von Fahrzeugkomponenten durch einen Bypass umgangen werden können. Hierzu bedarf es einer entsprechenden Einstellung von 3-Wege-Ventilen.

Druckschrift DE 10 2009 020 468 A1 beschreibt ein Heizungssystem für ein Fahrzeug mit einem elektrischen PTC-Heizelement. Wahlweise kann auch die Abwärme aus einem Kühler in den Kreislauf einbezogen werden.

Druckschrift EP 0 949 095 A1 betrifft eine kombinierte Einrichtung zur Motorkühlung und zur Innenraumbeheizung eines Hybridfahrzeugs. In einem Kühlkreislauf ist ein Elektroheizer vorgesehen. Durch eine entsprechende Stellung eines Elektroventils und eines Thermostatventils können weiterhin ein Kühler und ein Verbrennungsmotor in den Kreislauf einbezogen werden. Der Elektroheizer wird durch eine Steuereinheit in Abhängigkeit von einer durch eine Temperatursonde ermittelten Kühlmitteltemperatur ein- und ausgeschaltet_{.}

Es ist Aufgabe der vorliegenden Erfindung, eine Heizvorrichtung für ein Kraftfahrzeug, insbesondere mit Elektroantrieb, bereitzustellen, die ein effizientes Energiemanagement ermöglicht.

Diese Aufgabe wird durch eine Heizvorrichtung mit den Merkmalen des Anspruchs 1 gelöst.

Es ist der besondere Ansatz der vorliegenden Erfindung, eine Heizvorrichtung mit einem elektrischen PTC-Heizelement derart auszugestalten, dass bereitgestellte zusätzliche Wärmequellen für ein effizientes Energiemanagement genutzt werden können. Dies wird dadurch erreicht, dass ein Zusatzkreislauf, der Wärme separat von dem elektrischen Heizelement zur Verfügung stellt, wahlweise zuschaltbar ist. Durch ein Ansteuern des Zu- und Abschaltens des Zusatzkreislaufs je nach Heizanforderung und Betriebsbedingungen kann der Zusatzkreislauf in das Energiemanagement einbezogen werden.

Die Heizvorrichtung umfasst eine Steuereinrichtung zum Ansteuern des PTC-Heizelementes. Dies ermöglicht es, das PTC-Heizelement so anzusteuern, dass es einen Anteil der Gesamtheizleistung beiträgt, der nicht mittels des Zusatzkreislaufs erbracht werden kann. Es wird damit erreicht, dass die Heizung so weit als möglich aus anderen Quellen, als der elektrischen Energie, insbesondere aus Abwärme, gespeist wird. Die elektrische Heizung wird benutzt, wenn die Wärme aus anderen Quellen nicht ausreicht.

Vorzugsweise wird das wahlweise Zuschalten des Zusatzkreislaufs so gesteuert, dass der Wärmebedarf der Heizvorrichtung zunächst durch Zuschalten des Zusatzkreislaufs gedeckt wird. Der Zusatzkreislauf wird also so angesteuert, dass er dann zugeschaltet wird, wenn in der Heizvorrichtung ein Wärmebedarf besteht, der aus dem Zusatzkreislauf heraus gedeckt werden kann. Gemäß einer bevorzugten Ausführungsform erfolgt das wahlweise Zuschalten des Zusatzkreislaufs mit Hilfe von Ventilen.

Gemäß einer weiteren bevorzugten Ausführungsform umfasst die Heizvorrichtung zusätzlich eine Pumpe, mit der ein Umlauf des flüssigen Mediums in dem Heizkreislauf erzeugt wird. Der Umlauf des flüssigen Mediums in dem Heizkreislauf dient zum Transport der von dem elektrischen Heizelement sowie gegebenenfalls weiteren Wärmequellen bereitgestellten Wärme. Dies kann sowohl dadurch erfolgen, dass die Pumpe nur je nach Bedarf an- und ausgeschaltet wird, als auch durch eine zusätzliche Steuerung der Pumpleistung. Generell gilt: je höher die Heizleistung, desto größer muss die Strömungsgeschwindigkeit im Kreislauf sein. Bei größeren Heizleistungsanforderungen kann mit einer höheren Drehzahl eine größere Wärmemenge transportiert werden.

Vorzugsweise ist die separate Wärmequelle des Zusatzkreislaufs die Abwärme einer Komponente des Kraftfahrzeugs. Dadurch wird vorhandene Wärme effizient ausgenutzt, die andernfalls nutzlos abgeführt werden müsste. Es kann also die Kühlung einer Komponente oder eines Bereiches des Fahrzeugs mit der Heizung einer anderen Komponente oder eines anderen Fahrzeugbereiches verbunden werden. Dies dient zum Einsparen der elektrischen Fahrzeugenergie, und somit zur Erhöhung des Aktionsradius des Fahrzeugs. Vorzugsweise wird Wärme von einem Verbrennungsmotor eines Hybridfahrzeugs bereitgestellt. Ein solcher Verbrennungsmotor kann insbesondere ein sogenannter "Range Extender" sein, der insbesondere bei längeren Fahrten zugeschaltet wird, um die Reichweite zu erhöhen. Ein solcher "Range Extender" kann insbesondere im seriellen Hybridkonzept eingesetzt werden, wobei der Verbrennungsmotor (range extender) Elektroenergie erzeugt, die sowohl über einen Generator direkt zum Fahrzeugantrieb genutzt werden kann, als auch indirekt zur Batterieladung verwendet werden kann. Kombinationen durch wahlweises Umschalten sind möglich. Alternativ kann ein "Range Extender" auch über eine Kupplung als Direktantrieb zur Fahrzeugfortbewegung zugeschaltet werden (paralleles Hybridkonzept).

Weitere denkbare Wärmequellen zur Speisung des Zusatzkreislaufs sind die Abwärme von Bremsen, insbesondere auf längeren Gefällestrecken, und die Abwärme der Fahrzeugbatterie. Bei den für Elektro- und Hybridfahrzeuge verwendeten Fahrzeugbatterien im automobiltechnischen Hochvoltbereich von einigen 100 Volt (z.B. 300 V, 380 V oder 500 V) spielt die laufende Kühlung der Batterie im Betrieb eine wichtige Rolle. Andererseits ist es bei Inbetriebnahme des Fahrzeugs zunächst erforderlich, die kalte Batterie auf eine bestimmte Betriebstemperatur vorzuheizen. Im Rahmen der vorliegenden Erfindung ist es z.B. möglich, die Ventilsteuerung eines Zusatzkreislaufs zunächst zur Vorwärmung der Batterie zu nutzen, und wenn deren Betriebstemperatur erreicht ist, die Batterieabwärme zur Erwärmung des Fahrzeuginneren zu nutzen.

In der Fahrzeugkonfiguration kann die erfindungsgemäße Heizvorrichtung weitere wahlweise zuschaltbare Zuatzkreisläufe umfassen.

Gemäß einer bevorzugten Ausführungsform umfasst die Heizvorrichtung weiterhin einen in dem Heizkreislauf angeordneten Temperaturfühler (Temperatursensor), wobei die Heizvorrichtung so gesteuert wird, dass eine von dem Temperaturfühler gemessene Temperatur an einen vorgegebenen Temperatursollwert angeglichen wird. Vorzugsweise umfasst die erfindungsgemäße Steuervorrichtung weiterhin einen Komparator, der die von dem Temperaturfühler gemessene Temperatur mit einem Temperatursollwert vergleicht. Im Rahmen des erfindungsgemäßen Energiemanagements erfolgt, falls die Temperatur erhöht werden soll, zunächst eine Statusüberprüfung, ob ein Zusatzkreislauf in der Lage ist, hinreichend warmes Wasser zu liefern. Erst im Fall dessen, dass dies nicht ausreicht, wird die Leistung der PTC-Heizung erhöht. Für den Fall, dass die Temperatur verringert werden soll, wird zunächst die PTC-Heizleistung heruntergefahren, und dann zur schnelleren Abkühlung gegebenenfalls Kaltwasser aus einem Zusatzkreislauf zugeführt.

In einer weiteren bevorzugten Ausführungsform wird ein Zusatzkreislauf abgeschaltet, wenn er keine Wärme zum Heizen bereitstellen kann. Dies ist insbesondere wichtig, wenn zum Heizen auf die elektrische Heizung zurückgegriffen werden muss. Bei kaltem Fahrzeugzustand, wie z.B. vor Beginn einer Fahrt, erfolgt die Erwärmung um so effizienter, je weniger kaltes Wasser sich zunächst im Umlauf befindet, das beheizt werden muss.

In einer Heizvorrichtung gemäß der vorliegenden Erfindung wird das PTC-Heizelement in Abhängigkeit von einer vorgegebenen Heizleistung angesteuert. Hierbei ist die vorgegebene Heizleistung gleich der Differenz aus einer erforderlichen Gesamtheitsleistung und einer Heizleistung, die durch Zusatzkreisläufe abgedeckt werden kann.

Gemäß einer bevorzugten Ausführungsform sind ein oder mehrere PTC-Heizelemente, eine Steuereinrichtung, Ventile zum Zu- und Abschalten eines oder mehrerer Zusatzkreisläufe und eine Pumpe zum Erzeugen eines Umlaufs des flüssigen Mediums in einem gemeinsamen Gehäuse angeordnet. Eine solche Bauform ermöglicht eine besonders kompakte Heizvorrichtung, bei der insbesondere die zur Steuerung erforderlichen Elemente in die Heizvorrichtung derart integriert sind, dass ihre vorhandene Prozessorkapazität optimal ausgenutzt wird, und separate Steuereinheiten überflüssig werden. Dies ermöglicht eine höhere Integration und eine Verminderung des allgemeinen Steueraufwandes.

Vorzugsweise wird als flüssiges Medium (Wärmeträger) Wasser verwendet.

Weitere vorteilhafte Ausgestaltungen der vorliegenden Erfindung sind Gegenstand von Unteransprüchen.

Die Erfindung wird im Folgenden anhand der beiliegenden Figuren beschrieben, in denen:
Fig. 1 einen Heizkreislauf einer Heizvorrichtung mit einem Zusatzkreislauf gemäß der vorliegenden Erfindung darstellt, wobei
Fig. 1A einen Zustand darstellt, indem der Zusatzkreislauf von dem Heizkreislauf getrennt ist; und
Fig. 1B einen Zustand mit geöffnetem (in den Heizkreislauf einbezogenen) Zusatzkreislauf darstellt;
Fig. 2 eine Darstellung eines Heizkreislaufs gemäß der vorliegenden Erfindung mit einem weiteren Zusatzkreislauf darstellt;
Fig. 3 eine schematische Darstellung eins Ansteuerungskonzepts für eine Heizvorrichtung gemäß der vorliegenden Erfindung zeigt;
Fig. 4 ein Flussdiagramm für ein Ausführungsbeispiel der Ansteuerung einer Heizvorrichtung gemäß der vorliegenden Erfindung darstellt; und
Fig. 5 ein weiteres Flussdiagramm für eine beispielhafte Ansteuerung einer Heizvorrichtung gemäß der vorliegenden Erfindung darstellt.

Die vorliegende Erfindung betrifft eine Kraftfahrzeugheizung, die vorzugsweise als Warmwasserheizung ausgebildet ist und ein- oder mehrere PTC-Heizelemente umfasst. Sind mehrere Heizelemente vorhanden, so sind diese vorzugsweise zu einer oder mehreren Heizstufen zusammengefasst, wobei die Heizelemente einer Heizstufe gemeinsam angesteuert werden. Eine Ansteuerung ist zum Beispiel mit Hilfe von Pulsbreitenmodulation (pulse width modulation - PWM) möglich. Möglich ist weiterhin eine Kombination mehrerer binärer mit einer über PWM quasikontinuierlich oder feinstufig einstellbaren Heizstufe. Hiermit kann eine feinstufige Einstellbarkeit bei gleichzeitiger Minimierung der im automobiltechnischen Hochvoltbereich vorhandenen unerwünschten Begleiterscheinungen wie EMV (Elektromagnetische Verträglichkeit) - Störungen erreicht werden.

Eine Heizvorrichtung gemäß der vorliegenden Erfindung ermöglicht ein Heizen des Fahrzeuginnenraums und ggf. weiterer Fahrzeugkomponenten, wobei neben der elektrischen Energie (über die PTC-Heizelemente) auch weitere (vorzugsweise: nicht-elektrische) Wärmequellen genutzt werden können. Bei Letzteren handelt es sich weiter vorzugsweise um Abwärme von Fahrzeugkomponenten, die gekühlt werden müssen, und deren Abwärme sonst ungenutzt verlorengehen würde. Um dies zu erreichen, umfasst die Heizvorrichtung gemäß der vorliegenden Erfindung neben einem Hauptkreislauf (Heizkreislauf) einen oder mehrere Zusatzkreisläufe, deren Zuschaltung wahlweise erfolgt. Mit Hilfe einer entsprechenden Steuereinrichtung erfolgt das wahlweise Zu- und Abschalten so, dass die Heizvorrichtung ein effizientes Energiemanagement des Fahrzeugs unterstützt. Hierbei wird insbesondere erreicht, dass die elektrische Heizleistung nur insoweit in Anspruch genommen wird, als keine ausreichende Wärme aus anderen Quellen zur Verfügung steht. Dies trägt zu einer effizienten Ausnutzung der Elektroenergie und damit zu einer möglichst großen Reichweite (Aktionsradius) des Fahrzeugs bei.

Mit dem Ziel der Verminderung des allgemeinen Steueraufwandes wird die Prozessorkapazität, die ohnehin zur Steuerung der elektrischen Heizeinrichtung erforderlich ist, vorzugsweise mit Zusatzaufgaben beaufschlagt, die der Steuerung der Zusatzkreisläufe dienen.

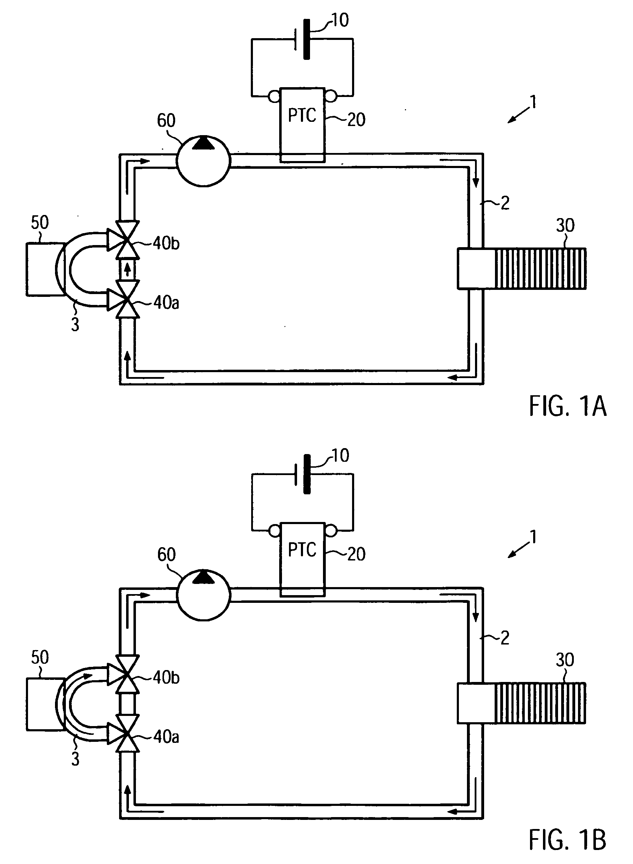

Ein Beispiel für einen Aufbau einer erfindungsgemäßen Heizvorrichtung mit einem Heizkreislauf (Hauptkreislauf) 2 und einem Zusatzkreislauf 3 ist in Fig. 1 schematisch dargestellt. Fig. 1A zeigt den Zusatzkreislauf im von dem Hauptkreislauf abgesperrten Zustand, und Fig. 1B zeigt den geöffneten Zusatzkreislauf, so dass der flüssige Wärmeträger (im Folgenden beispielhaft als Wasser bezeichnet) den Zusatzkreislauf 3 durchströmt.

Die Heizvorrichtung 1 umfasst einen Hauptkreislauf 2 und ein mittels 3/2-Wege-Ventilen 40a und 40b angeschlossenen Zusatzkreislauf 3.

Pfeile in dem Kreislauf symbolisieren das durch den Kreislauf strömende Wasser. Aus Sicherheitsgründen im Kraftfahrzeug beträgt die maximale Wassertemperatur vorzugsweise 60°C.

In dem Hauptkreislauf befinden sich weiterhin ein PTC-Heizelement 20, ein Radiator (Wärmetauscher) 30 und eine Pumpe 60. In einer hier dargestellten bevorzugten Ausführungsform sind die Ventile 40a und 40b in einem von der PTC-Heizung 20 aus entgegen der Strömungsrichtung gelegenen Teil des Heizkreislaufs 2 angeordnet. Es ist jedoch auch eine andere Anordnung möglich. Eine zusätzliche, im Zusatzkreislauf angeordnete Wärmequelle 50 ist in einem bevorzugten Ausführungsbeispiel ein zusätzlicher Verbrennungsmotor ("Range Extender") eines Hybridfahrzeugs.

Die Stromversorgung des PTC-Heizelelements 20 erfolgt über die Fahrzeugbatterie 10, die auch für die Traktion (den Antrieb) des Fahrzeugs zuständig ist. In dem Wärmetauscher (Radiator) 30 wird Wärme von dem Wasser an die umgebende Luft abgegeben. Der Radiator 30 kann derart angeordnet sein, dass die Luft, z.B. im Fahrzeuginnenraum, direkt erwärmt wird. Alternativ kann Luft erwärmt werden, die z.B. über ein Gebläse in dem Fahrzeuginnenraum eingeblasen wird. Des Weiteren ist es möglich, eine kombinierte direkte und indirekte Heizung der Innenraumluft mit Hilfe mehrerer Radiatoren zu realisieren. Die Pumpe 6, vorzugsweise mit elektrischem Antrieb, erhält die Strömung des Wassers im Kreislauf aufrecht. Je nach Ansteuerung der Ventile 40a und 40b erfolgt der Umlauf des Wasser in dem Kreislauf entweder auf direktem Wege durch das kurze Stück des Hauptkreislaufs zwischen Ventil 40a und Ventil 40b (Fig. 1A), oder aber unter Einbeziehung des Zusatzkreislaufs 3 (Fig. 1B). Wie in Fig. 1B gezeigt, fließt das Wasser hierbei ausgehend von den in Richtung Zusatzkreislauf 3 geöffneten Ventil 40a zunächst durch den Zusatzkreislauf, zum Range Extender 50. Dabei kann das Wasser, vorzugsweise mit Hilfe eines weiteren Wärmetauschers (in der Figur nicht dargestellt) Abwärme vom Range Extender aufnehmen. Anschließend fließt das Wasser durch den Zusatzkreislauf 3 über das in entsprechender Stellung befindliche Ventil 40b in den Hauptkreislauf zurück.

Anstelle des Range Extenders 50 kann in dem Zusatzkreislauf auch eine andere, von der elektrischen PTC-Heizung separate, Wärmequelle angeordnet sein. Mit Hilfe einer entsprechenden Wärmetauscheinrichtung kann z.B. die Abwärme von Bremsen durch das den Zusatzkreislauf durchströmende Wasser abgeführt werden.

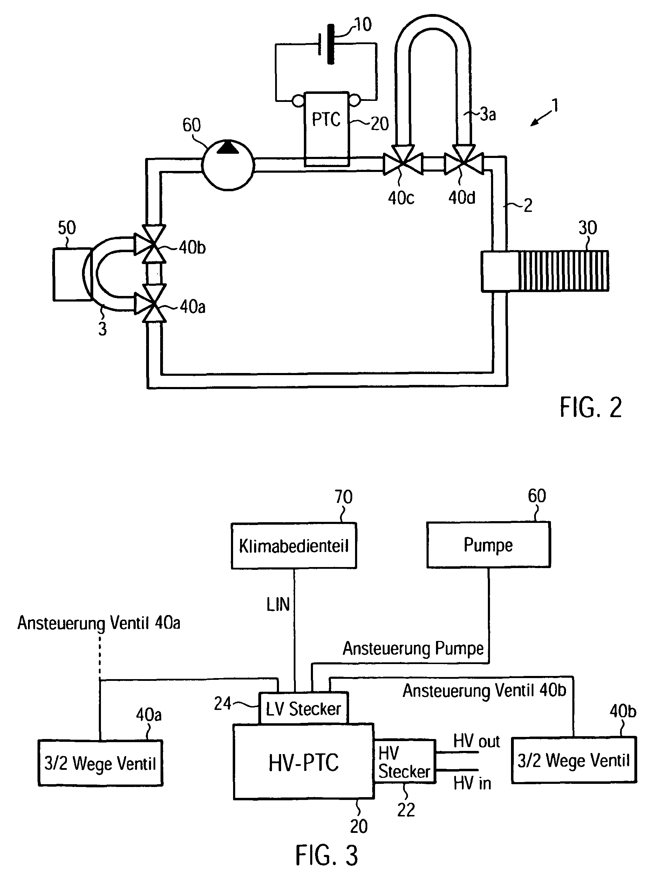

Um die Heizvorrichtung 1 in das Gesamtsystem des Energiemanagements des Elektro-oder Hybridfahrzeugs einzubeziehen, ist eine entsprechende Ansteuerung zumindest des PTC-Heizelements 20 und der Ventile 40a und 40b erforderlich. Das Steuerungskonzept und die entsprechende Steuervorrichtung (in Fig. 1 nicht dargestellt), werden weiter unten unter Bezug auf die Fig. 3 bis 5 näher erläutert. Vorzugsweise wird durch die Steuereinrichtung auch die Pumpe 60 gesteuert, wobei entweder nur ihr Ein- und Ausschalten, oder aber auch die Pumpleistung (abhängig von der Drehzahl) gesteuert werden kann. Vom mechanischen Aufbau her ist es vorteilhaft, die PTC-Heizung gemeinsam mit den Ventilen, der Pumpe und der Ansteuerungsvorrichtung in einem einzigen Gehäuse zu integrieren. Dies ist raumsparend und besonders kostengünstig.

Es ist darüber hinaus im Rahmen des Konzepts der vorliegenden Erfindung möglich, durch weitere wahlweise anschaltbare Zusatzkreisläufe bestimmte Bereiche des Kraftfahrzeugs gezielt mit Wärme zu versorgen (optional in den Heizkreislauf einzubeziehen). Die Ventile zum Anschluss solcher optionaler Zusatzkreisläufe sind vorzugsweise von der elektrischen PTC-Heizeinrichtung aus gesehen in Strömungsrichtung angeordnet.

In Fig. 2 ist neben dem Zusatzkreislauf 3, wahlweise zuschaltbar über die Ansteuerung der Ventile 40a und 40b ein zweiter Zusatzkreislauf 3a, wahlweise zuschaltbar mit Hilfe der 3/2-Wege-Ventile 40c und 40d, veranschaulicht. In dem in Fig. 2 veranschaulichten Beispiel verläuft der Zusatzkreislauf 3a in der Nähe der Fahrzeugbatterie 10. Ein solcher Zusatzkreislauf kann zweierlei Funktionen erfüllen:

Zum einen kann der Zusatzkreislauf 3a zum Vorheizen der Batterie, bis zum Erreichen von deren Betriebstemperatur dienen. Hierzu wird der Zusatzkreislauf 3a durch eine entsprechende Ansteuerung der Ventile 40c und 40d in den Heizkreislauf einbezogen, und von durch das PTC-Heizelement 20 erwärmtem Wasser durchströmt. In dem Stadium des Vorheizens der Batterie sind die Ventile 40a und 40b vorzugsweise so angesteuert, dass der Zusatzkreislauf 3 des Range Extenders abgeschaltet ist. Da dieser vor Inbetriebnahme des Fahrzeugs noch keine Wärme bereitstellen kann, ist es zur schnellen und effizienten Erwärmung des Wassers in dem Heizkreislauf vorteilhaft, die umlaufende Wassermenge durch Abschalten des Zusatzkreislaufs 3 zu verringern.

Weiterhin ist es auch alternativ möglich, den Radiator 30 zu Erwärmung des Fahrgastraumes ebenfalls in einem Abschnitt des Kreislaufs vorzusehen, der über entsprechende Ventile wahlweise zuschaltbar ist (in Fig. 2 nicht dargestellt). Mit einer solchen Ausführungsform kann zum besonders schnellen Erwärmen der Batterie der Radiator 30 zunächst aus dem Heizkreislauf herausgenommen werden, und später, vorzugsweise nach Erreichen der Betriebstemperatur der Batterie, zugeschaltet werden. Gleichzeitig kann der Zusatzkreislauf 3a abgeschaltet werden.

Zum anderen kann der Kreislauf 3a als zusätzliche Wärmequelle herangezogen werden, in ähnlicher Weise wie der links in Fig. 2 dargestellte Zusatzkreislauf 3. Als separate Wärmequelle kann hierbei die beim laufenden Betrieb der Batterie 10 entstehende Batterieabwärme genutzt werden. Hierzu wird der Zusatzkreislauf 3a nach Erreichen der Betriebstemperatur der Batterie nicht vom übrigen Kreislauf getrennt, oder aber je nach Bedarf während des laufenden Betriebes zu einem späteren Zeitpunkt erneut zugeschaltet.

Fig. 3 zeigt eine Übersicht über das Ansteuerungskonzept der Heizvorrichtung gemäß einer Ausführungsform der vorliegenden Erfindung. Es ist ein entscheidender Vorteil der vorliegenden Erfindung, dass die Steuervorrichtung für die Ansteuerung von Ventilen und Pumpen in die in einem Hochvolt (HV)-PTC-Heizer 20 ohnehin vorhandene Steuerelektronik integriert werden kann. Mit anderen Worten wird die Prozessorkapazität der bereits im PTC-Heizer vorhandenen Steuerelektronik mit Zusatzaufgaben beaufschlagt, wie die Ansteuerung der Pumpe 60 sowie der Ventile (in Fig. 3 symbolisiert durch die 3/2-WegeVentile 40a und 40b). Zu diesem Zweck verfügt der HV-PTC-Heizer, zusätzlich zu dem Hochvoltanschluss (symbolisiert durch den HV-Stecker 22), noch über Anschlüsse im automobiltechnischen Niedrigvoltbereich (LV, von englisch niedrige Spannung = "low voltage", symbolisiert durch die LV-Stecker 24). Diese dienen zum einen der Übermittlung von Steuerdaten an die gegenüber dem HV-PTC 20 externen Komponenten (Pumpen und Ventile). Zum anderen werden über diese Anschlüsse Steuerdaten an die Steuereinrichtung übermittelt. Im vorgegebenen Bild ist als Datenquelle das Klimabedienteil 70 des Fahrzeugs exemplarisch gezeigt. Dadurch können z.B. vom Benutzer Anforderungen hinsichtlich einer gewünschten Temperatur, oder auch Leistungsanforderungen, eingegeben werden. Die Datenkommunikation erfolgt vorzugsweise über einen Fahrzeugbus (in Fig. 3 symbolisiert durch einen LIN-Bus). Die Erfindung ist jedoch nicht auf bestimmte Schnittstellenformate beschränkt. Es können auch andere Bussysteme, wie z.B. CAN-Bussysteme, zur Anwendung kommen. Über die Steueranschlüsse im Niedrigvoltbereich (vorzugsweise über das Fahrzeugbussystem) können weitere für die Steuerung der Heizvorrichtung relevante Daten an die in den HV-PTC 20 integrierte Steuervorrichtung kommuniziert werden. Dies betrifft z. B. die Bereitstellung von Daten, die durch Temperaturmesseinrichtungen (Temperatursensoren) im Heizkreislauf oder an anderen Positionen im Fahrzeug ermittelt werden. Alternativ oder zusätzlich können auch Daten bezüglich der Verfügbarkeit von Heizenergie (z.B. aus Abwärme) in bestimmten wahlweise zuschaltbaren Zusatzkreisläufen über den Fahrzeugbus und den LV-Stecker 24 an die Steuereinrichtung kommuniziert werden.

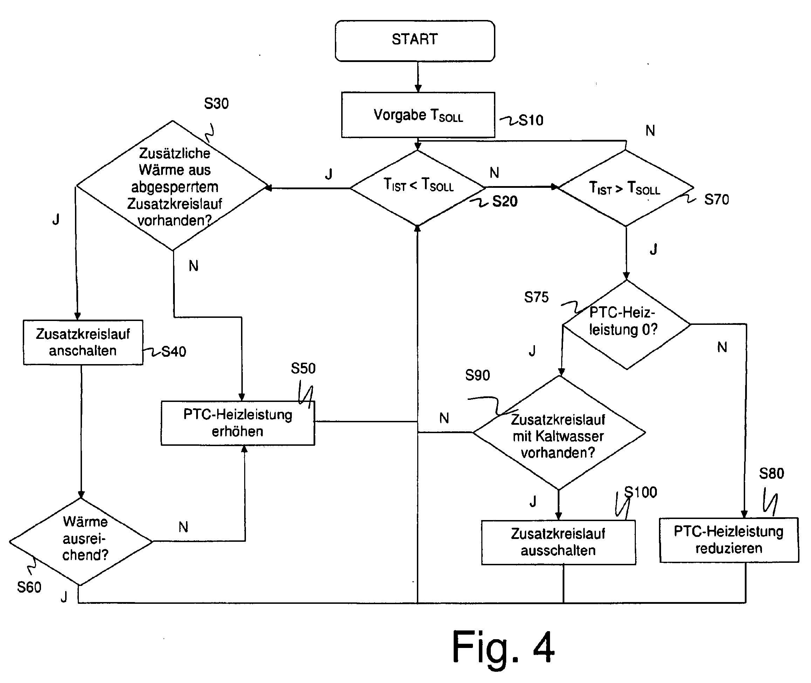

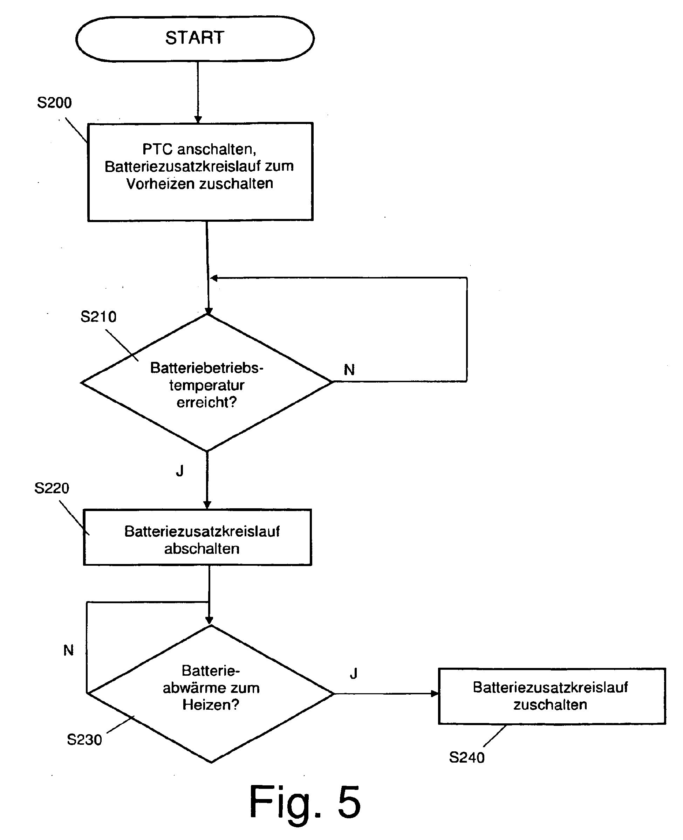

Im Folgenden werden beispielhafte Ausführungsformen einer Steuerung einer Heizvorrichtung gemäß der vorliegenden Erfindung anhand der Flussdiagramme in den Fig. 4 und 5 beschrieben.

Fig. 4 stellt ein Verarbeitungsbeispiel dar, bei dem eine gemessene Temperatur an einen vorgegebenen Temperatursollwert angeglichen werden soll. Die gemessene Temperatur kann hierbei eine mit einem Temperaturfühler an einer bestimmten Position des Heizkreislaufs erfasste Temperatur sein. Hierbei ist der Temperaturfühler vorzugsweise in Strömungsrichtung gesehen hinter der PTC-Heizeinrichtung angeordnet. Es sind aber auch andere Anordnungen möglich.

Alternativ könnte es sich auch um eine Temperatur handeln, die in einem Bereich des Kraftfahrzeugs, die von der Heizvorrichtung zu erwärmen ist, gemessen wird. Dies kann z.B. der Fahrgastinnenraum sein. Es kann sich aber auch um eine Temperatur an einem anderen Bereich des Kraftfahrzeugs handeln, wie z.B. im Bereich der Fahrzeugbatterie (Akkumulator).

In einem ersten Verfahrensschritt (S10) wird zunächst der Temperatursollwert T_{SOLL} festgelegt. Dies kann von einem Bediener (Fahrer oder Fahrzeuginsasse), z.B. mit Hilfe des Klimabediengeräts 70 geschehen. Im zweiten Verfahrensschritt (S20) überprüft die in die HV-PTC-Heizeinrichtung 20 integrierte Steuerelektronik, ob die von dem Temperaturfühler aktuell gemessene Temperatur T_{IST} niedriger als der Temperatursollwert ist. Wenn der gemessene Temperaturwert kleiner ist als der vorgegebene Temperatursollwert (S20:J), schreitet die Verarbeitung zum Schritt S30 weiter.

Im Schritt S30 führt die Steuerelektronik eine Beurteilung durch, ob ein abgesperrter Zusatzkreis zusätzliche Wärme bereitstellen kann. Derartige Information wird der Steuereinrichtung, vorzugsweise über den Fahrzeugbus, zur Verfügung gestellt. Zum Beispiel steht der Steuereinrichtung Information über die verfügbare Abwärme eines Range-Extenders (zusätzlicher Verbrennungsmotor bei einem Hybridfahrzeug) über die Temperatur des Range-Extenders zur Verfügung. Analog kann entsprechende Information für andere aus Abwärme gespeiste Quellen, wie zum Beispiel Bremsen oder Fahrzeugbatterie, anhand deren Temperatur bereit gestellt werden.

In dem Fall, dass ein abgesperrter Zusatzkreislauf Wärme bereitstellen kann (S30:J), wird indem folgenden Schritt (S40) der betreffende Zusatzkreislauf durch entsprechende Ansteuerung der Ventile zugeschaltet. Die Verarbeitung schreitet dann fort zum Schritt S60. Im Schritt S60 wird von der Steuerelektronik beurteilt, ob der Zusatzkreislauf ausreichend Wärme zur Verfügung stellen kann, um die Temperatur an den Temperatursollwert T_{SOLL} anzugleichen. Falls die Beurteilung positiv ist (S60:J), endet die Verarbeitung gemäß Fig. 4 hiermit. Wie durch den Pfeil (S60:J -> S20) dargestellt, beginnt der Verarbeitungszyklus anschließend von vorn. Im alternativen Fall (S60:N) wird im nächsten Schritt (S50) die Heizleistung der PTC-Heizeinrichtung erhöht.

Falls alternativ im Schritt S30 beurteilt wird, dass kein derzeit abgesperrter Zusatzkreislauf in der Lage ist, zusätzliche Wärme bereitzustellen (S30:N), schreitet die Verarbeitung direkt zum Schritt S50 fort. Im Schritt S50 wird die PTC-Heizleistung von der Steuereinrichtung erhöht.

Wird weiterhin im Beurteilungsschritt S20 festgestellt, dass die aktuell gemessene Temperatur nicht kleiner als der Temperatursollwert ist (S20:N), so schreitet die Verarbeitung zunächst zum Beurteilungsschritt S70 fort. Im Schritt S70 wird beurteilt, ob die aktuelle Temperatur größer ist, als der Temperatursollwert. Ist dies nicht der Fall (S70:N), ist also die aktuelle Temperatur (gegebenenfalls innerhalb vorgegebener Toleranzen), gleich dem Temperatursollwert, so endet die Verarbeitung gemäß dem Flussdiagramm aus Fig. 4 hiermit, und der Zyklus beginnt von neuem mit dem Schritt S20.

Im alternativen Fall (S70:J), wenn also die gemessene Temperatur größer ist, als der Temperatursollwert, schreitet die Verarbeitung zum Schritt S75 fort. Im Schritt S75 wird von der Steuereinrichtung beurteilt, ob die PTC-Heizeinrichtung aktuell Heizwärme abgibt. Wird von der PTC-Heizeinrichtung aktuell Heizwärme abgegeben, auf (S75:J), so schreitet die Verarbeitung zum Schritt S90 fort. Im Schritt S90 wird von der Steuereinrichtung beurteilt, ob ein derzeit abgesperrter Zusatzkreislauf vorhanden ist, der Kaltwasser in den Heizkreislauf einspeisen kann. Ist dies nicht der Fall (S90:N), so endet die Verarbeitung gemäß dem Flussdiagramm aus Fig. 4 hiermit. Im alternativen Fall (S90:J) werden zunächst alle Zusatzkreisläufe zugeschaltet, die Kaltwasser bereitstellen können (Schritt S100). Hiermit wird eine schnelle Abkühlung (Angleichung des Temperaturistwertes an den Temperatursollwert) erreicht.

Wird im Beurteilungsschritt S75 beurteilt, dass von der PTC-Heizeinrichtung aktuell Wärme abgegeben wird (S75:N), wird im nachfolgenden Schritt S80 zunächst die PTC-Heizleistung reduziert. Anschließend schreitet die Verarbeitung zum Entscheidungsschritt S20 zurück, und es wird weiterhin überprüft, ob die erfolgte Reduzierung der PTC-Heizleistung ausreichend ist, um die gemessene Temperatur dem Temperatursollwert anzugleichen. Dementsprechend wird die Verarbeitung gemäß der in Fig. 4 dargestellten Schleifen, ausgehend vom Beurteilungsschritt S20 permanent wiederholt. Alternativ kann die Beurteilung gemäß den Schritten S20 und gegebenenfalls S70 auch in vorgegebenen, regelmäßigen Abständen durchgeführt werden. Daraus ergibt sich eine entsprechende Wartezeit zwischen dem Ende eines Schleifendurchlaufs und dem Eintritt in den nächsten Schleifendurchlauf im Schritt S20. Ein Neustart der Verarbeitung gemäß Fig. 4, mit Schritt S10, erfolgt bei jeder Neufestlegung der vorgegebenen Sollwerttemperatur T_{SOLL}.

Weitere Modifikationen des exemplarisch in Fig. 4 dargestellten Ablaufs sind im Rahmen der vorliegenden Erfindung möglich. Zum Beispiel kann zunächst Schritt S70 zum Beurteilen, ob T_{IST} > T_{SOLL} ist, ausgeführt werden, und im negativen Fall anschließend die Verarbeitung zum Schritt S20 fortfahren.

Eine weitere Alternative besteht darin, dass man anstelle einer Temperatur (T_{SOLL}) eine zu erreichende Heizleistung vorgibt. Die Steuerung der Heizvorrichtung einschließlich der PTC-Heizeinrichtung 20 und der Zusatzkreisläufe 3, 3a erfolgt dann so, dass zunächst beurteilt wird, welcher Anteil an der Heizleistungsanforderung aus nichtelektrischen Wärmequellen über Zusatzkreisläufe bereitgestellt werden kann. Der Einsatz der PTC- Heizung beschränkt sich im Rahmen des Energiemanagements auf den Restanteil, der nicht aus anderen Quellen gespeist werden kann. Schließlich ist es auch möglich, dass eine Leistungsvorgabe ihren Ursprung in einer Temperaturvorgabe hat, die von der Steuerelektronik in eine Leistungsvorgabe umgesetzt wird.

Nachfolgend wirft die Verarbeitung gemäß einem anderen Ausführungsbeispiel für die Ansteuerung einer erfindungsgemäßen Heizvorrichtung unter Bezugnahme auf das Flussdiagramm aus Fig. 5 beschrieben.

Die Verarbeitung gemäß Fig. 5 beginnt bei Inbetriebnahme des Kraftfahrzeugs nach längerem Stillstand damit, dass zunächst im Schritt S200 die PTC-Heizvorrichtung 20 eingeschaltet wird, und der Batteriezusatzkreislauf 3a, durch entsprechende Ansteuerung der Ventile 40c und 40d (siehe Fig. 2) zum Vorheizen der Fahrzeugbatterie 10 zugeschaltet wird. Da bei Fahrzeugstillstand keine Wärmeenergie aus zusätzlichen Wärmequellen, wie Abwärme, zu erwarten ist, ist die Stellung der Ventile zum Anschluss weiterer Zusatzkreisläufe, wie z.B. Zusatzkreislauf 3 zum Range-Extender 50, vorzugsweise in abgesperrter Stellung. Damit kann ein schnellerer Wasserumlauf und somit ein schnelleres Vorheizen der Batterie erzielt werden.

Nachfolgend wird im Beurteilungsschritt S210 beurteilt, ob die Betriebstemperatur der Fahrzeugbatterie 10 erreicht wurde. Solange die Betriebstemperatur der Batterie 10 noch nicht erreicht wurde (S210:N), bleibt der Status der Heizvorrichtung unverändert (Schleife S210:N -> S210).

Sobald die Batteriebetriebstemperatur erreicht wurde (S210:J), schreitet die Verarbeitung zum Schritt S220 fort. Im Schritt S220 wird zunächst der Batteriezusatzkreislauf 3a abgeschaltet, in dem die Stellung der Ventile 40c und 40d entsprechend verändert wird. Nachfolgend wird im Schritt S230 von der Steuereinrichtung beurteilt, ob ein Bedarf an zusätzlicher Wärme im Kreiskreislauf benötigt wird, und ob der Zusatzkreislauf 3a der Batterie Abwärme bereitstellen kann. Eine derartige Beurteilung kann z.B. im Rahmen des Energiemanagements stattfinden, welches beispielhaft in Fig. 4 dargestellt ist. Alternativ kann die Beurteilung auch nach anderen Kriterien ausgeführt werden, z.B. basierend auf einer bestimmten Heizleistungsvorgabe.

Solange keine Batterieabwärme zum Heizen verfügbar bzw. erforderlich ist (S230:N), bleibt der Status der Heizvorrichtung unverändert. Anderenfalls (S230:J) wird von der Steuereinrichtung im Schritt S240 der Batteriezusatzkreislauf 3a durch entsprechende Ansteuerung der Ventile 40c und 40d erneut zugeschaltet.

Die vorliegende Erfindung, wie in den beigefügten Patentansprüchen definiert, ist nicht auf die oben detailliert beschriebenen Ausführungsbeispiele beschränkt. Insbesondere können einzelne Merkmale bestimmter Ausführungsbeispiele kombiniert werden, solange dies nicht zu Widersprüchen führt.

Zusammenfassend, betrifft die vorliegende Erfindung eine PTC-basierte Heizvorrichtung für ein Kraftfahrzeug, vorzugsweise mit Elektroantrieb, bei der ein oder mehrere Zusatzkreisläufe wahlweise zuschaltbar an einen Heizkreislauf angeschlossen sind. Dadurch wird es ermöglicht, eine Vielzahl von Möglichkeiten zur Temperaturregelung für das im Elektro-Kfz wichtige Energiemanagement einzusetzen.

## Patentansprüche

1. Heizvorrichtung für ein Kraftfahrzeug, insbesondere mit Elektroantrieb, wobei ein flüssiges Medium als Wärmeträger verwendet wird, umfassend:
einen Heizkreislauf (2) mit einem flüssigen Medium als Wärmeträger,
ein in dem Heizkreislauf (2) angeordnetes elektrisches PTC-Heizelement (20) zum Erwärmen des flüssigen Mediums, und
mindestens einen Zusatzkreislauf (3, 3a) mit einer separaten Wärmequelle (10, 50), der dem Heizkreislauf wahlweise zuschaltbar ist,
**gekennzeichnet durch**
eine Steuereinrichtung (25) zum Ansteuern des PTC-Heizelements (20), wobei das PTC-Heizelement (20) in Abhängigkeit von einer vorgegebenen Heizleistung so angesteuert wird, dass es einen Anteil der Gesamtheizleistung beiträgt, der nicht mittels Zusatzkreisläufen (3, 3a) erbracht werden kann, und
wobei die vorgegebene Heizleistung gleich der Differenz aus einer erforderlichen Gesamtheizleistung und einer Heizleistung ist, die **durch** Zusatzkreisläufe (3, 3a) abgedeckt werden kann.

2. Heizvorrichtung nach Anspruch 1, mit einer Steuereinrichtung (25) zur Steuerung des wahlweisen Zuschaltens des Zusatzkreislaufs (3, 3a), so dass ein Wärmebedarf der Heizvorrichtung zunächst durch Zuschalten des Zusatzkreislaufs (3, 3a) gedeckt wird.

3. Heizvorrichtung nach Anspruch 1 oder 2, wobei das wahlweise Zuschalten des Zusatzkreislaufs (3, 3a) mit Hilfe von Ventilen (40a, 40b, 40c, 40d) erfolgt.

4. Heizvorrichtung nach einem der Ansprüche 1 bis 3, weiterhin umfassend eine Pumpe (60) zum Erzeugen eines Umlaufs des flüssigen Mediums in dem Heizkreislauf (2).

5. Heizvorrichtung nach einem der Ansprüche 1 bis 4, wobei die separate Wärmequelle (10, 50) des Zusatzkreislaufs (2) aus der Abwärme einer Komponente des Kraftfahrzeugs gespeist wird.

6. Heizvorrichtung nach Anspruch 5, wobei die Abwärme von einem Range Extender - Verbrennungsmotor (50) eines Hybridfahrzeugs bereitgestellt wird.

7. Heizvorrichtung nach einem der Ansprüche 1 bis 6, weiterhin umfassend einen in dem Heizkreislauf (2) angeordneten Temperaturfühler, wobei die Heizvorrichtung so gesteuert wird, dass eine von dem Temperaturfühler gemessene Temperatur an einen vorgegebenen Temperatursollwert angeglichen wird.

8. Heizvorrichtung nach einem der Ansprüche 1 bis 7, wobei der Zusatzkreislauf (3, 3a) abgeschaltet wird, wenn der Zusatzkreislauf (3, 3a) keine Wärme zum Heizen bereitstellen kann.

9. Heizvorrichtung nach einem der Ansprüche 1 bis 8, umfassend mindestens einen weiteren wahlweise zuschaltbaren Zusatzkreislauf (3, 3a).

10. Heizvorrichtung nach einem der Ansprüche 1 bis 9, wobei ein Zusatzkreislauf (3, 3a) zugeschaltet wird, wenn die Temperatur in dem Heizkreislauf (2) verringert werden soll und das flüssige Medium in dem zugeschalteten Zusatzkreislauf (3, 3a) kälter ist, als in dem Heizkreislauf (2).

11. Heizvorrichtung nach Anspruch 9 oder 10, wobei ein wahlweise zuschaltbarer Zusatzkreislauf (3, 3a) zum gezielten Heizen eines bestimmten Bereiches oder einer bestimmten Komponente des Kraftfahrzeugs ausgestaltet ist.

12. Heizvorrichtung nach einem der Ansprüche 1 bis 11, wobei das PTC-Heizelement (20), eine Steuereinrichtung (25), Ventile (40a, 40b, 40c, 40d) zum Zu- und Abschalten eines Zusatzkreislaufs (3, 3a) und eine Pumpe (60) zum Erzeugen eines Umlaufs des flüssigen Mediums in einem gemeinsamen Gehäuse angeordnet sind.

## Claims

1. A heating device for a motor vehicle, in particular with electrical propulsion, wherein a liquid medium is used as the heat transfer medium, comprising:
a heating circuit (2) with a liquid medium as heat transfer medium,
an electrical PTC heating element (20) arranged in the heating circuit (2) for heating the liquid medium, and
at least one supplementary circuit (3, 3a) with a separate heat source (10, 50) which can be optionally switched into the heating circuit,
**characterized by**
a control device (25) for controlling the PTC heating element (20), wherein the PTC heating element (20) is controlled in dependence of a predetermined heating power such that it contributes a proportion of the total heating power which cannot be provided by means of supplementary circuits (3, 3a), and
wherein the predetermined heating power is equal to the difference between a required total heating power and a heating power which can be covered by supplementary circuits (3, 3a).

2. A heating device according to claim 1, with a control device (25) for the control of the optional switching of the supplementary circuit (3, 3a), so that a heating requirement of the heating device is first of all covered by switching in the supplementary circuit (3, 3a).

3. A heating device according to claim 1 or 2, wherein the optional switching of the supplementary circuit (3, 3a) occurs with the aid of valves (40a, 40b, 40c, 40d).

4. A heating device according to any of claims 1 to 3, further comprising a pump (60) for producing a circulation of the liquid medium in the heating circuit (2).

5. A heating device according to any of claims 1 to 4, wherein the separate heat source (10, 50) of the supplementary circuit (2) is supplied from the waste heat of a vehicle component.

6. A heating device according to claim 5, wherein the waste heat is made available from a range extender internal combustion engine (50) of a hybrid vehicle.

7. A heating device according to any of claims 1 to 6, furthermore comprising a temperature probe arranged in the heating circuit (2), wherein the heating device is controlled such that a temperature measured by the temperature probe is adjusted to a specified temperature target value.

8. A heating device according to any of claims 1 to 7, wherein the supplementary circuit (3, 3a) is switched off when the supplementary circuit (3, 3a) cannot provide any heat for heating.

9. A heating device according to any of claims 1 to 8, comprising at least one further supplementary circuit (3, 3a) which can be switched in optionally.

10. A heating device according to any of claims 1 to 9, wherein a supplementary circuit (3, 3a) is switched in when the temperature in the heating circuit (2) is to be reduced and the liquid medium in the supplementary circuit (3, 3a), which is switched in, is colder than in the heating circuit (2).

11. A heating device according to claim 9 or 10, wherein a supplementary circuit (3, 3a), which can be switched in optionally, is formed for specifically heating a certain region or a certain component of the motor vehicle.

12. A heating device according to any of claims 1 to 11 wherein the PTC heating element (20), a control device (25), valves (40a, 40b, 40c, 40d) for switching a supplementary circuit (3, 3a) in and out and a pump (60) for producing a circulation of the liquid medium are arranged in a common housing.

## Revendications

1. Dispositif de chauffage pour véhicule automobile, en particulier un véhicule à entraînement électrique, dans lequel un fluide est utilisé comme caloporteur, comprenant :
un circuit de chauffage (2) avec un fluide comme caloporteur,
un élément chauffant PTC électrique (20) agencé dans le circuit de chauffage (2) pour chauffer le fluide, et
au moins un circuit auxiliaire (3, 3a) avec une source de chaleur séparée (10, 50) qui peut être connecté au choix au circuit de chauffage,
**caractérisé par**
un dispositif de commande (25) pour commander l'élément chauffant PTC (20), dans lequel l'élément chauffant PTC (20) est commandé en fonction d'une puissance de chauffage prédéterminée de telle manière qu'il contribue une partie de la puissance de chauffage totale qui ne peut pas être produite par des circuits auxiliaires (3, 3a), et
dans lequel la puissance de chauffage prédéterminée est égale à la différence entre une puissance de chauffage totale disponible et une puissance de chauffage qui peut être couverte par des circuits auxiliaires (3, 3a).

2. Dispositif de chauffage selon la revendication 1, avec un dispositif de commande (25) pour commander la connexion au choix du circuit auxiliaire (3, 3a) de telle manière qu'une demande de chaleur du dispositif de chauffage est d'abord couverte par la connexion du circuit auxiliaire (3, 3a).

3. Dispositif de chauffage selon la revendication 1 ou 2, dans lequel la connexion au choix du circuit auxiliaire (3, 3a) est effectuée à l'aide de vannes (40a, 40b, 40c, 40d).

4. Dispositif de chauffage selon l'une des revendications 1 à 3, comprenant en outre une pompe (60) pour produire une circulation du fluide dans le circuit de chauffage (2).

5. Dispositif de chauffage selon l'une des revendications 1 à 4, dans lequel les différentes sources de chaleur (10, 50) du circuit auxiliaire (2) sont alimentées par la chaleur résiduelle d'un organe du véhicule automobile.

6. Dispositif de chauffage selon la revendication 5, dans lequel la chaleur résiduelle est produite par un moteur à combustion interne de prolongation d'autonomie (50) d'un véhicule hybride.

7. Dispositif de chauffage selon l'une des revendications 1 à 6, comprenant en outre un capteur de température agencé dans le circuit de chauffage (2), dans lequel le dispositif de chauffage est commandé de telle sorte qu'une température mesurée par le capteur de température est ajustée pour être égale à une valeur cible de température prédéterminée.

8. Dispositif de chauffage selon l'une des revendications 1 à 7, dans lequel le circuit auxiliaire (3, 3a) est coupé lorsque le circuit auxiliaire (3, 3a) ne peut pas fournir de chaleur de chauffage.

9. Dispositif de chauffage selon l'une des revendications 1 à 8, comprenant au moins un autre circuit auxiliaire (3, 3a) qui peut être connecté au choix.

10. Dispositif de chauffage selon l'une des revendications 1 à 9, dans lequel un circuit auxiliaire (3, 3a) est connecté lorsque la température dans le circuit de chauffage (2) doit être réduite et que le fluide dans le circuit auxiliaire connecté (3, 3a) est plus froid que dans le circuit de chauffage (2).

11. Dispositif de chauffage selon la revendication 9 ou 10, dans lequel un circuit auxiliaire (3, 3a) connectable au choix est conçu pour le chauffage ciblé d'une zone déterminée ou d'un organe déterminé du véhicule automobile.

12. Dispositif de chauffage selon l'une des revendications 1 à 11, dans lequel l'élément chauffant PTC (20), un dispositif de commande (25), des vannes (40a, 40b, 40c, 40d) pour la connexion et déconnexion d'un circuit auxiliaire (3, 3a) et une pompe (60) sont agencés dans un boîtier commun pour produire une circulation du fluide.
